# EUROPEAN PATENT APPLICATION

(11) **EP 3 783 123 A1**
(43) Date of publication of application: **24.02.2021**
(21) Application number: 19789320.9
(22) Date of filing: 19.03.2019
(51) Int. Cl.: C21D 9/28, C21D 1/10, C21D 1/18, C21D 1/667

(54) **INDUCTION HARDENING DEVICE**

(30) Priority: 16.04.2018 JP 2018078300
(71) Applicant: NIPPON STEEL CORPORATION, Chiyoda-ku Tokyo 100-8071 (JP)
(72) Inventor: YAMANE Akihito, Tokyo 100-8071 (JP); HATA Toshiyuki, Tokyo 100-8071 (JP); KOZUKA Chihiro, Tokyo 100-8071 (JP)
(74) Representative: Zimmermann & Partner Patentanwälte mbB
(86) International application number: PCT/JP2019/011500
(87) International publication number: WO 2019/202898

(57) **Abstract**

Provided is an induction heating apparatus (1) a heating portion which has a primary coil member (12) comprising a wound wire (12a) and a secondary coil member (13) disposed inside the wound wire (12a) of the primary coil member (12) and having a hollow cylindrical shape into which a shaft-shaped body (101) can be inserted and is relatively movable along an axial direction of the shaft-shaped body (101); and a cooling portion (16) which has a spray nozzle (18) through which a cooling liquid can be sprayed onto a surface of the shaft-shaped body (101), is disposed behind the heating portion in a relative movement direction, and is relatively movable along the axial direction of the shaft-shaped body (101) together with the heating portion, wherein a length (L₂) of the secondary coil member (13) along a relatively movement direction thereof is longer than a coil length (L₁) of the primary coil member (12), and a coil end (13e) of the secondary coil member (13) on a cooling portion (16) side protrudes toward the cooling portion (16) side than a coil end (12d) of the primary coil member (12) on the cooling portion (16) side.

## Description

### [Technical Field of the Invention]

The present invention relates to an induction hardening apparatus.

Priority is claimed on Japanese Patent Application No. 2018-078300, filed April 16, 2018, the content of which is incorporated herein by reference.

### [Related Art]

Various surface treatments may be applied to components requiring a long life. Particularly, induction hardening improves the surface hardness, wear resistance, and fatigue resistance of the surface of components and is thus widely used. Therefore, various induction hardening apparatuses have been proposed. For example, in a case where a long member such as a shaft-shaped body made of steel is subjected to induction hardening, so-called traverse hardening is performed. Traverse hardening is a method of hardening a shaft-shaped body while moving an induction heating coil (hereinafter, referred to as induction coil) and a cooler relative to the shaft-shaped body in an axial direction.

In the traverse hardening, the shaft-shaped body is locally heated by the induction coil until at least the surface layer of the shaft-shaped body becomes austenitic. Then, the cooler that follows the induction coil sprays a cooling liquid or the like onto the surface of the heated shaft-shaped body to rapidly cool the surface within a short period of time, whereby the surface layer has a martensitic structure.

In the traverse hardening in the related art, in order to shorten the time from rapid heating to rapid cooling so as to maintain the uniformity of the steel structure of the shaft-shaped body after hardening, the induction coil and the cooler are disposed close to each other to make the facility compact. However, when the induction coil and the cooler are disposed close to each other, there may be cases where the cooling liquid sprayed from the cooler bounces on the surface of the shaft-shaped body, scatters to the vicinity of the induction coil, and excessively cools the shaft-shaped body. In particular, a shaft-shaped body in which a large-diameter portion having an outer diameter larger than that of a shaft main body is provided in a part of the shaft main body has a level difference between the shaft main body and the large-diameter portion. Therefore, when a cooling liquid sprayed onto the shaft-shaped body collides with the level difference, there may be cases where the cooling liquid is likely to bounce to the induction coil side, and excessive cooling of the shaft-shaped body frequently occurs.

Patent Document 1 proposes an induction hardening apparatus in which a nozzle through which compressed air is sprayed, as a means for shielding the splash of a cooling liquid, is provided between an induction heating portion and a cooling liquid spraying portion.

Patent Document 2 proposes a hardening apparatus in which, between a heater that heats a portion to be hardened and a cooler that ejects a cooling fluid to the portion being heated by the heater, a spray fluid ejector for preventing the cooling fluid from adhering to the portion being heated is provided.

### [Prior Art Document]

### [Patent Document]

[Patent Document 1] Japanese Unexamined Patent Application, First Publication No. 2001-32017
[Patent Document 2] Japanese Unexamined Patent Application, First Publication No. 2014-214326

### [Disclosure of the Invention]

### [Problems to be Solved by the Invention]

However, the hardening apparatuses described in Patent Documents 1 and 2 have a problem in that although scattering of a fluid such as the cooling liquid can be prevented, scattering of solid matter cannot be prevented. Examples of the solid matter include scales formed on the surface of the shaft-shaped body. For example, when the surface layer of the shaft-shaped body is heated to an austenite region by the wound induction coil, a scale is generated on the surface of the shaft-shaped body, and there may be cases where the scale is peeled off from the shaft-shaped body by the cooling liquid sprayed from the cooler, scatters, and adhere to the wound induction coil. Since the scale is not a fluid but solid matter, even the apparatuses described in Patent Documents 1 and 2 cannot prevent the scale from scattering and adhering to the wound induction coil. When the scale adheres to gaps between windings of the induction coil, a short circuit may occur in the induction coil, and there may be cases where the induction coil is damaged due to abnormal heating or the like. Alternatively, there is a concern that a voltage applied to the induction coil may suddenly change due to the occurrence of a short circuit, an abnormal load may be applied to a power supply, and a power supply circuit may be broken. Furthermore, when the heating coil or the power supply circuit fails, an operation has to be stopped, and there is concern that the efficiency of the hardening operation may significantly decrease.

The present invention has been made in view of the above circumstances, and an object thereof is to provide an induction hardening apparatus capable of preventing solid matter such as a scale from adhering to the induction coil comprising the wound wire.

### [Means for Solving the Problem]

In order to solve the above problems, the present invention includes the following aspects.
[1] An induction hardening apparatus according to an aspect of the present invention is an apparatus that performs induction hardening on a shaft-shaped body, the apparatus comprising:
   a heating portion which has a primary coil member comprising a wound wire through which a high frequency current flows and a secondary coil member disposed inside the wound wire of the primary coil member and having a hollow cylindrical shape into which the shaft-shaped body can be inserted, and is relatively movable along an axial direction of the shaft-shaped body; and
   a cooling portion which has a spray nozzle through which a cooling liquid can be sprayed onto a surface of the shaft-shaped body, is disposed behind the heating portion in a relative movement direction, and is relatively movable along the axial direction of the shaft-shaped body together with the heating portion,
   wherein a coil end of the secondary coil member on a cooling portion side protrudes toward the cooling portion side than a coil end of the primary coil member on the cooling portion side.
   According to the induction hardening apparatus of the above aspect, since the coil end of the secondary coil member on the cooling portion side protrudes toward the cooling portion side than the coil end of the primary coil member on the cooling portion side, even if solid matter such as a scale is scattered by the spray of the cooling liquid, the scattered scale collides with the secondary coil member before adhering to the primary coil member, so that adhering of the scale to the primary coil member can be prevented.
[2] In the induction hardening apparatus according to [1], a length of the secondary coil member along a relatively movement direction thereof may be longer than a coil length of the primary coil member.
   According to the induction hardening apparatus of the above aspect, since the length of the secondary coil member is longer than the coil length of the primary coil member, a scattered scale collides with the secondary coil member before adhering to the primary coil member, so that adhering of the scale to the primary coil member can be reliably prevented.
[3] In the induction hardening apparatus according to [1] or [2], a coil end of the secondary coil member on a side opposite to the cooling portion may protrude toward a side opposite to the cooling portion than a coil end of the primary coil member on a side opposite to the cooling portion.
   According to the induction hardening apparatus of the above aspect, since the coil end of the secondary coil member on the side opposite to the cooling portion protrudes toward the side opposite to the cooling portion than the coil end of the primary coil member on the side opposite to the cooling portion, the coil end of the primary coil member on the side opposite to the cooling portion will be shielded by the secondary coil member, even if a solid matter such as a scale is widely scattered, a scattered scale collides with the secondary coil member before adhering to the primary coil member, so that adhering of the scale to the primary coil member can be prevented.
[4] In the induction hardening apparatus according to any one of [1] to [3], the induction hardening apparatus may comprise a means for moving which relatively moves the heating portion along the axial direction of the shaft-shaped member in a state that relative positions of the primary coil member and the secondary coil member are fixed.
   According to the induction hardening apparatus of the above aspect, since the primary coil member and the secondary coil member are moved by the means for moving in a state that their relative positions are fixed, the position of the secondary coil member with respect to the primary coil member always does not change, so that a scale can be prevented from adhering to the primary coil member.
[5] In the induction hardening apparatus according to any one of [1] to [4], a slit may be provided on the secondary coil member along the relatively movement direction thereof and an insulator may be provided inside the slit.

According to the induction hardening apparatus of the above aspect, since the slit is provided on the secondary coil member along the relatively movement direction and the insulator is provided inside the slit, the insulator prevents a scale from passing through the slit, so that adhering of the scale to the primary coil member through the slit can be prevented.

### [Effects of the Invention]

According to the induction hardening apparatus according to each of the above aspects of the present invention, it is possible to provide an induction hardening apparatus capable of preventing solid matter such as a scale from adhering to the induction coil comprising the wound wire.

### [Brief Description of the Drawings]

FIG. 1 is a cutaway view illustrating a part of an induction hardening apparatus according to an embodiment of the present invention, and is a side view schematically illustrating the induction hardening apparatus.
FIG. 2 is a cutaway view illustrating a part of the induction hardening apparatus according to the embodiment of the present invention, and is a side view schematically illustrating a main part of the induction hardening apparatus.
FIG. 3 is a plan view schematically illustrating a main part of the induction hardening apparatus according to the embodiment of the present invention.
FIG. 4 is a cutaway view illustrating a part of an induction hardening apparatus according to another example of the induction hardening apparatus according to the embodiment of the present invention, and is a side view schematically illustrating a main part of the induction hardening apparatus.
FIG. 5A is a view for describing an operation of the induction hardening apparatus according to the embodiment of the present invention, and is a side view schematically illustrating a part of the induction hardening apparatus illustrated in FIGS. 1 to 3, which is illustrated in a cutaway view.
FIG. 5B is a view for describing an operation of the induction hardening apparatus according to the embodiment of the present invention, and is a side view schematically illustrating a part of the induction hardening apparatus illustrated in FIG. 4, which is illustrated in a cutaway view.
FIG. 5C is a side view schematically illustrating a part of an induction hardening apparatus of a comparative example, which is illustrated in a cutaway view.
FIG. 5D is a side view schematically illustrating a part of an induction hardening apparatus of a comparative example, which is illustrated in a cutaway view.

### [Embodiments of the Invention]

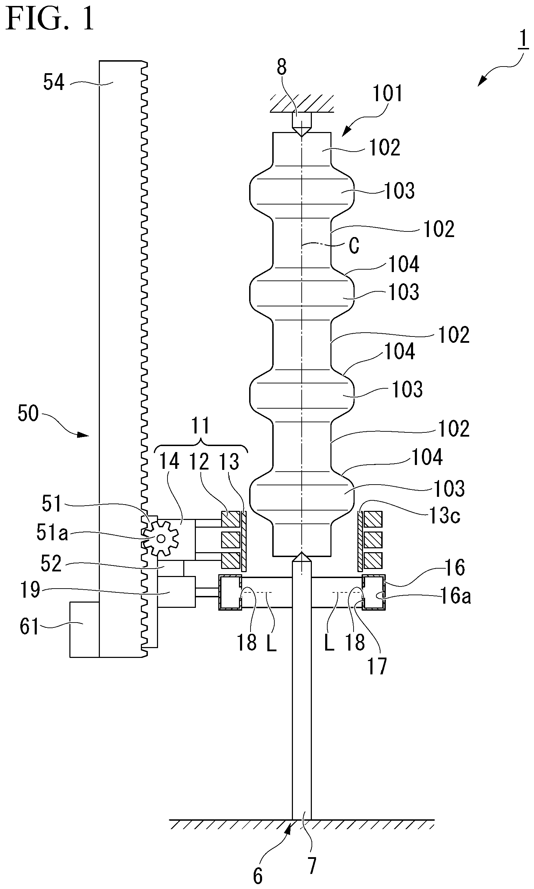

Hereinafter, an induction hardening apparatus according to an embodiment of the present invention will be described with reference to FIGS. 1 to 3. It is obvious that the present invention is not limited to the following embodiments. Also, it is obvious that the respective elements of the following embodiments can be combined within the scope of the present invention.

As illustrated in FIG. 1, an induction hardening apparatus 1 of the present embodiment is an apparatus for performing traverse hardening on a shaft-shaped body 101 such as an axle for a railway vehicle using a high frequency current. The traverse hardening is a method of hardening the shaft-shaped body 101 while moving a heating portion comprising an induction heating coil (hereinafter, referred to as an induction coil) and a cooling portion relative to the shaft-shaped body 101 in an axial direction.

Examples of the shaft-shaped body applicable to the induction hardening apparatus 1 of the present embodiment may comprise a shaft-shaped body which is provided with a large-diameter portion in a part of a shaft main body and thus has a level difference portion between the shaft main body and the large-diameter portion, and a shaft-shaped body having a shaft main body and not having a large-diameter portion and a level difference portion.

First, an example of the shaft-shaped body 101 will be described. The shaft-shaped body 101, which is subjected to traverse hardening by the induction hardening apparatus 1 of the present embodiment, comprises a shaft main body 102 and a large-diameter portion 103 having a diameter (outer diameter) larger than that of the shaft main body 102. The shaft-shaped body 101 illustrated in FIG. 1 has four large-diameter portions 103, the large-diameter portions 103 are separated from each other, and the shaft main body 102 is provided between the large-diameter portions 103. The outer diameters of the large-diameter portions 103 may be substantially equal to each other or may be different from each other. The shaft main body 102 and the large-diameter portions 103 are each formed in a cylindrical shape. The central axes of the shaft main body 102 and the large-diameter portions 103 are disposed coaxially with the common axis. Hereinafter, the common axis is referred to as an axis C. Furthermore, at the boundary between the shaft main body 102 and the large-diameter portion 103, there is a level difference portion 104 for connecting the shaft main body 102 and the large-diameter portion 103. The level difference portion 104 is inclined at a predetermined angle with respect to the axis C of the shaft-shaped body 101. The inclination angle is, for example, in a range of 15° to 90°. In the induction hardening apparatus 1 of the present embodiment, the shaft-shaped body 101 is disposed so that the axis C extends along an up-down direction.

The number of the large-diameter portions 103 etc. included in the shaft-shaped body 101 is not limited to four, and may be one to three or five or more. The shaft-shaped body 101 is formed of steel.

As illustrated in FIG. 1, the induction hardening apparatus 1 comprises a heating portion 11 having a primary coil member 12 and a secondary coil member 13, a cooling portion 16. The heating portion 11 and the cooling portion 16 are connected to a moving device 50 which is a means for moving, and can be moved by the moving device 50. Furthermore, the induction hardening apparatus 1 is provided with a support member 6 for supporting the shaft-shaped body 101.

The moving device 50 comprises a rack member 54, a support plate 51, and a motor 52. The rack member 54 extends along the up-down direction. The heating portion 11 and the cooling portion 16 are fixed to the support plate 51. Furthermore, the support plate 51 is provided with a pinion gear 51a, and the pinion gear 51a meshes with the rack member 54. The pinion gear 51a is configured to rotate such that the support plate 51 moves upward or downward with respect to the rack member 54 when the motor 52 is driven.

The support member 6 comprises a lower center 7 and an upper center 8. The lower center 7 supports the lower end of the shaft-shaped body 101 from below the shaft-shaped body 101. The upper center 8 supports the upper end of the shaft-shaped body 101 from above the shaft-shaped body 101. Each of the centers 7 and 8 supports the shaft-shaped body 101 so that the axis C extends in the up-down direction. In addition, the shaft-shaped body 101 is rotatable about the axial direction. The shaft-shaped body 101 may be rotated relative to the moving device 50 by rotating the lower center 7 and the upper center 8.

The induction hardening apparatus 1 of the present embodiment performs traverse hardening on the shaft-shaped body 101 by raising the heating portion 11 and the cooling portion 16 with respect to the shaft-shaped body 101 along the axial direction of the shaft-shaped body 101 by operating the moving device 50.

As illustrated in FIGS. 1 to 3, the heating portion 11 comprises the primary coil member 12 through which a high frequency current flows, the secondary coil member 13 which is disposed inside the primary coil member 12 and is disposed close to the shaft-shaped body 101 than the primary coil member 12, and a current transformer 14.

The primary coil member 12 is consisting of a wound wire 12a in an annular shape in which a coil wire material is spirally wound, and a high frequency current flows therethrough. The inner diameter of the wound wire 12a of the primary coil member 12 is larger than the outer diameter of the secondary coil member 13. Thus, the primary coil member 12 and the secondary coil member 13 are not in contact with each other and separated.

The secondary coil member 13 is formed of a hollow cylindrical member in which both end surfaces 13a, 13a are close to each other. The secondary coil member 13 is disposed inside the primary coil member 12. The inner diameter of the secondary coil member 13 is larger than the outer diameter of the large-diameter portion 103 of the shaft-shaped body 101. Thus, a space is provided inside the secondary coil member 13 so that the shaft-shaped body 101 can be inserted therethrough.

Further, in the secondary coil member 13, the both end surfaces 13a, 13a are separated from each other, and a slit 13b is formed between the end surfaces 13a, 13a. The slit 13b is provided along a moving direction of the secondary coil member 13. Further, the slit 13b is filled with an insulator (insulating material) 13c. A material of the insulator is not particularly limited, and may be any material as long as it can maintain the electrically insulated state between the end surfaces 13a, 13a of the secondary coil member 13 and can withstand the temperature generated during traverse hardening. Preferable examples of the insulating material include, for example, heat resistant phenolic resin, fine ceramics and mica.

The current transformer 14 is electrically and mechanically connected to both end portions of the wound wire 12a of the primary coil member 12. A high frequency current flows through the wound wire 12a of the primary coil member 12 by the current transformer 14.

The current transformer 14 is attached to the support plate 51 of the moving device 50. The coil member 12 is mechanically connected to the current transformer 14. Accordingly, the coil member 12 is connected to the support plate 51 of the moving device 50 via the current transformer 14.

Further, the secondary coil member 13 is mechanically attached to the support plate 51 of the moving device 50 directly. Accordingly, the primary coil member 12 and the secondary coil member 13 are in a state that the relative positions with respect each other are fixed by the support plate 51. Accordingly, the primary coil member 12 and the secondary coil member 13 can be relatively moved with respect to the shaft-shaped body 101 along the axial direction of the shaft-shaped body 101 while their relative positions with respect each other are fixed by the moving device 50.

Next, the primary coil member 12 and the secondary coil member 13 are further described in detail.

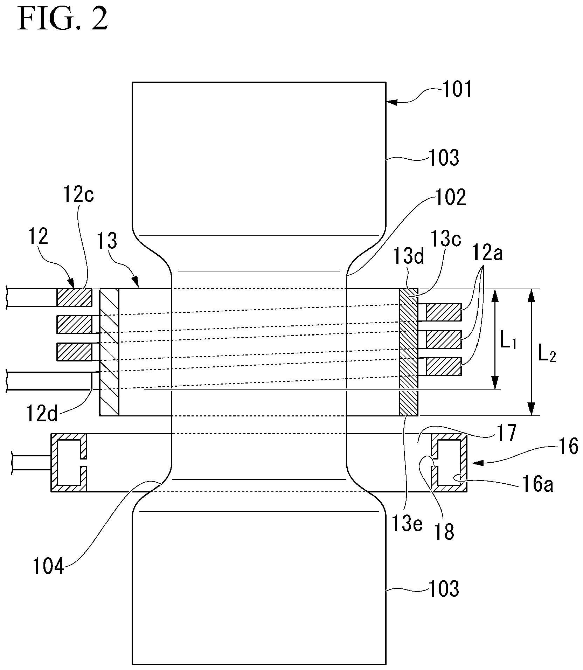

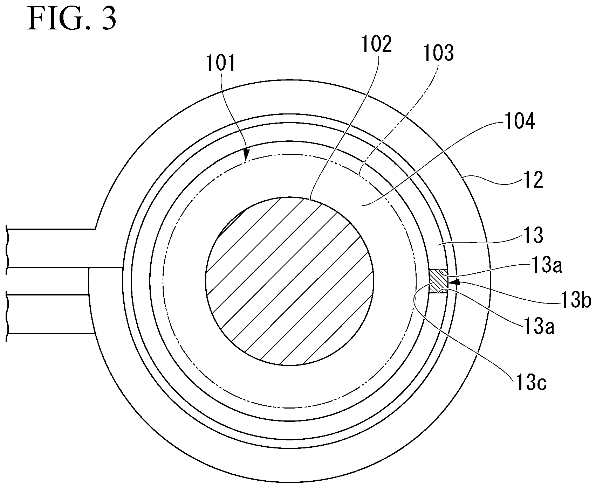

As illustrated in FIGS. 2 and 3, a length L₂ of the secondary coil member 13 along the relative movement direction is longer than a coil length L₁ of the primary coil member 12. However, the present invention is not limited to this, the length L₂ of the secondary coil member 13 may be as same as the coil length L₁ of the primary coil member 12, and otherwise the length L₂ of the secondary coil member 13 may be shorter than the coil length L₁ of the primary coil member 12.

Here, the relative movement direction is a moving direction of the heating portion 11 with respect to the shaft-shaped body 101 during traverse hardening. Further, the length L₂ of the secondary coil member 13 along the relative movement direction is, in the relative movement direction which is described above, a distance between a coil end 13d of the secondary coil member 13 which is disposed on a upstream side in the relative movement direction and a coil end 13e which is disposed on a downstream side (cooling unit 16 side). The coil length L₁ of the primary coil member 12 is, in the wound wire 12a wound in an annular shape, a distance between a coil end 12c of the primary coil member 12 which is disposed on the upstream side in the relative movement direction and a coil end 12d which is disposed on the downstream side (the cooling unit 16 side).

Each of the distances L₁ and L2 is a distance between the ends along the relative movement direction of the primary coil member 12 and the secondary coil member 13. In other words, the up steam side which is described above is a traveling direction of the secondary coil member 13 when the secondary coil member 13 moves with respect to the shaft-shaped body 101 during traverse hardening. Further, in other words, the downstream side is a traveling direction of the shaft-shaped body 101 when the shaft-shaped body 101 moves with respect to the secondary coil member 13 during traverse hardening.

Further, as illustrated in FIGS. 2 and 3, the coil end 13e of the secondary coil member 13 which is disposed on the cooling unit 16 side protrudes toward the cooling portion 16 side than the coil end 12d of the primary coil member 12 which is disposed on the cooling unit 16 side.

The primary coil member 12 and the secondary coil member 13 can be relatively moved with respect to the shaft-shaped body 101 while maintaining the above positional relationship.

Nest, the cooling portion 16 is disposed behind the heating portion 11 in a relative movement direction. The relative movement direction refers to a relative movement direction of the heating portion 11 with respect to the shaft-shaped body 101 during traverse hardening. In the case of the present embodiment, as illustrated in FIGS. 1 and 2, the cooling portion 16 is disposed below the heating portion 11.

The cooling portion 16 is formed in an annular shape in the present embodiment. A through-hole 17 is formed in the cooling portion 16 so as to penetrate therethrough in the up-down direction. The shaft-shaped body 101 can be inserted into the through-hole 17 of the cooling portion 16. An internal space 16a is formed in the cooling portion 16. On the inner circumferential surface of the cooling portion 16 facing the through-hole 17 side, a plurality of spray nozzles 18 are formed separately from each other in a circumferential direction. Each spray nozzle 18 communicates with the internal space 16a. The shape of the cooling portion 16 is not limited to the annular shape, and may be circular, elliptical, rectangular parallelepiped, or the like.

A pump 19 is connected to the cooling portion 16. The pump 19 supplies a cooling liquid L such as water to the internal space 16a of the cooling portion 16. The cooling liquid L supplied to the internal space 16a is sprayed toward the shaft-shaped body 101 through the plurality of spray nozzles 18 to cool the shaft-shaped body 101.

The pump 19 is attached to the support plate 51. Accordingly, the cooling portion 16 can be relatively moved along the axial direction of the shaft-shaped body 101.

Next, a method of performing traverse hardening on the shaft-shaped body 101 using the induction hardening apparatus of the present embodiment will be described.

First, as illustrated in FIG. 1, the heating portion 11 and the cooling portion 16 are positioned on the lower end side of the shaft-shaped body 101. Next, the current transformer 14 is driven to cause a high frequency current to flow through the primary coil member 12. In addition, the pump 19 is driven to eject the cooling liquid L from the plurality of spray nozzles 18 of the cooling portion 16. Next, the motor 52 is driven to move the support plate 51 upward with respect to the rack member 54. Accordingly, the heating portion 11 and the cooling portion 16 allow the shaft-shaped body 101 to be inserted therethrough in this order and are moved upward. The primary coil member 12 and the secondary coil member 13 relatively move with respect to the shaft-shaped body 101 while maintaining the above positional relationship.

In the heating portion 11, the high frequency current supplied to the primary coil member 12 causes an induced current on the surface of the secondary coil member 13 on the primary coil member 12 side. The generated induced current also flows, through the end surface 13a of the secondary coil member 13 separated by the slit 13b, to the surface of the secondary coil member 13 on the shaft-shaped body 101 side. When the shaft-shaped body 101 is inserted into the secondary coil member 13 of the heating portion 11, a high frequency current flows on the surface of the shaft-shaped body 101 due to the induced current which flows in the secondary coil member 13, and Joule heat is generated due to electric resistance of the shaft-shaped body 101, so that the surface layer of the shaft-shaped body 101 is heated to an austenite formation region.

Subsequently, the cooling portion 16 is raised to the point heated by the heating portion 11, and the cooling liquid L is sprayed to the heated point of the shaft-shaped body 101. Accordingly, at least the surface layer of the shaft-shaped body 101 is rapidly cooled and a martensitic structure is generated. As the heating portion 11 and the cooling portion 16 are raised from the lower end toward the upper end of the shaft-shaped body 101, heating by heating portion 11 and cooling by the cooling portion 16 are sequentially performed, and the surface of the shaft-shaped body 101 is inductionhardened. In order to cause the shaft-shaped body 101 to be uniformly heated and uniformly cooled, it is preferable to rotate the shaft-shaped body 101 during hardening around the axial direction.

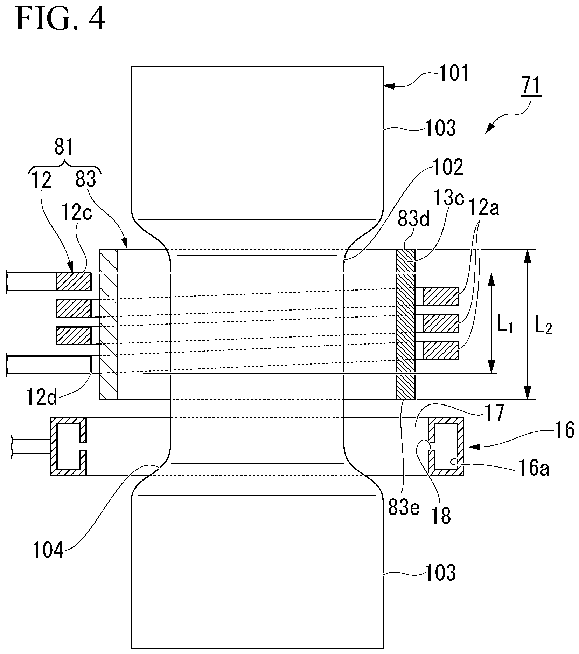

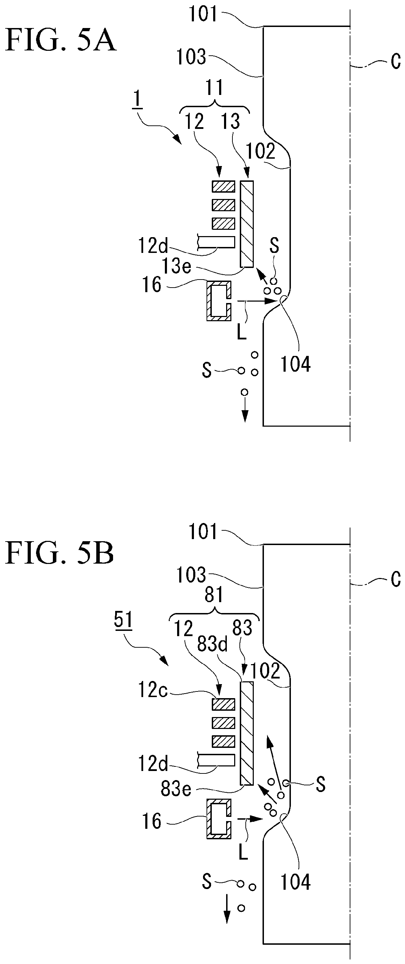

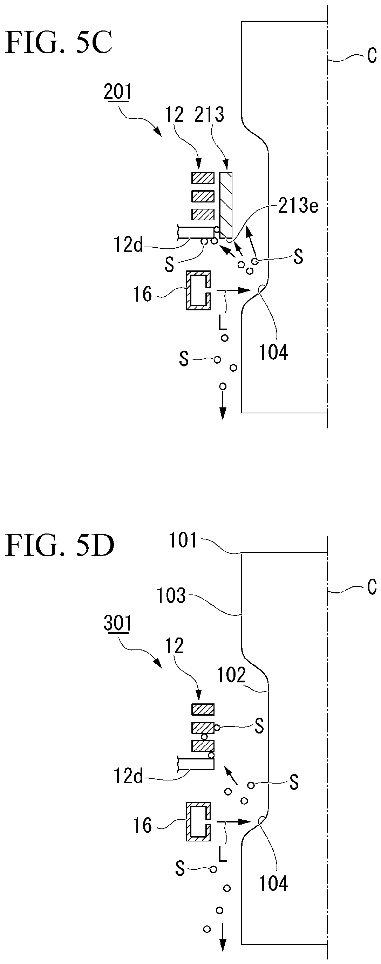

FIGS. 5A to 5D illustrate the positional relationship between the shaft-shaped body 101, the primary coil member 12, the secondary coil member 13, and the cooling unit 16 during traverse hardening, as a side view schematically illustrating a part of various induction hardening apparatuses in a cutaway view. FIG. 5A illustrates the induction hardening apparatus 1 illustrated in FIGS. 1 to 3. FIG. 5B illustrates the induction hardening apparatus 71 illustrated in FIG. 4 as another example. The induction hardening apparatus 71 of FIG. 5B will be described below. FIGS. 5C and 5D illustrate induction hardening apparatuses 201, 301 of comparative examples.

When the surface of the shaft-shaped body 101 is heated to the austenite formation region by the heating portion 11 during traverse hardening, scale is generated on the surface of the shaft-shaped body 101. Thereafter, when the cooling liquid L sprayed from the cooling portion 16 collides with the surface of the shaft-shaped body 101, the impact causes the scale to peel off. Most of the peeled scale immediately drops downward.

However, when the cooling liquid L sprayed from the cooling portion 16 collides with the level difference portion 104 of the shaft-shaped body 101, there is concern that the scale adhering to the level difference portion 104 may be scattered toward the primary coil member 12 side by the spray of the cooling liquid L. This is because, since the level difference portion 104 is inclined with respect to the axial direction, when the cooling liquid L collides with the level difference portion 104, the cooling liquid L is repelled in a diagonally upward direction, and the scale is scattered in the diagonally upward direction together with the cooling liquid L.

In the comparative example illustrated in FIG. 5C, the positions of the coil end 213e of the secondary coil member 213 and the coil end 12d of the primary coil member 12 are at the same height. In the comparative example illustrated in FIG. 5D, there is no secondary coil member and only the primary coil member 12 constitutes the heating portion. In these examples illustrated in FIGS. 5C and 5D, the primary coil member 12 is not shielded by the secondary coil member 13 with respect to the scattered scale S. Accordingly, when the scale S scatters diagonally upward together with the cooling liquid L, there is a concern that the scale S adheres to the primary coil member 12, and the scale S enters the gaps between the windings 12a of the primary coil member 12, so that the primary coil member 12 is internally short-circuited.

However, in the case of the induction hardening apparatus 1 of the present embodiment illustrated in FIG. 5A, the coil end 13e of the secondary coil member 13 on the cooling part 16 side protrudes toward the cooling part 16 side than the coil end 12d of the primary coil member 12 on the cooling part 16 side. Accordingly, the scale S scattered diagonally upward with the cooling liquid L collides with the secondary coil member 13 but does not collide with the primary coil member 12, so that the scale is prevented from adhering to the primary coil member 12.

In addition, in the case that the slit 13b of the secondary coil member 13 is filled with the insulator 13c, the scattered scale S collides with the insulator 13c, so that the scale S is prevented from adhering to the primary coil member 12. The insulator 13c may be filled in all the spaces of the slit 13b of the secondary coil member 13, or a part of the slit 13b of the secondary coil member 13 may be filled with the insulator 13c.

As described above, according to the induction hardening apparatus 1 of the present embodiment, since the coil end 13e of the secondary coil member 13 on the cooling portion 16 side protrudes toward the cooling portion 16 side than the coil end 12d of the primary coil member 12 on the cooling portion 16 side, even if solid matter such as a scale is scattered by the spray of the cooling liquid L, the scattered scale collides with the secondary coil member 13 before adhering to the primary coil member 12, so that adhering of the scale to the primary coil member 12 can be prevented. In particular, in the shaft-shaped body 101 having the level difference portion 104, there is a concern that the scale may be scattered toward the primary coil member 12 side as the cooling liquid L collides with the level difference portion 104, since the secondary coil member 13 is provided, adhering of the scale to the primary coil member 12 can be reliably prevented.

Further, according to the induction hardening apparatus 1 of the present embodiment, since the length L₂ of the secondary coil member 13 is longer than the coil length L₁ of the primary coil member 12, the scattered scale collides with the secondary coil member 13 before adhering to the primary coil member 12, so that adhering of the scale to the primary coil member 12 can be prevented.

Further, according to the induction hardening apparatus 1 of the present embodiment, since the primary coil member 12 and the secondary coil member 13 are moved by the moving device 50 in a state that their relative positions are fixed, a position of the secondary coil member 13 with respect to the primary coil member 12 always does not change, a state that the primary coil member 12 is always shielded by the secondary coil member 13 with respect to the scattered scale is maintained, so that the scale can be prevented from adhering to the primary coil member 12.

Furthermore, according to the induction hardening apparatus 1 of the present embodiment, since the slit 13b is provided on the secondary coil member 13 along the relatively movement direction and the slit 13b is filled with the insulator 13c, the insulator 13c prevents the scale from passing through the slit 13b, so that adhering of the scale to the primary coil member 12 through the slit 13b can be prevented.

Next, a modified example of the present embodiment will be described. FIG. 4 illustrates an induction hardening apparatus 71 which is a modified example of the present embodiment. Among constituent elements illustrated in FIG. 4, the same constituent elements as those illustrated in FIGS. 1 to 3 are denoted by the same reference symbols as those in FIGS. 1 to 3, and detailed description thereof will be omitted.

The heating unit 81 of the induction hardening apparatus 71 illustrated in FIG. 4 comprises a primary coil member 12, a secondary coil member 83, and a current transformer which is not illustrated. In the same manner as the secondary coil member 13 illustrated in FIGS. 1 to 3, the secondary coil member 83 is formed of a hollow cylindrical member in which both ends are close to each other. Both ends of the secondary coil member 83 are separated from each other, a slit is formed between the ends, and the slit is filled with an insulator. The secondary coil member 83 is mechanically attached to the support plate of the moving device directly. Accordingly, the relative positions of the primary coil member 12 and the secondary coil member 83 with respect to each other are fixed by the support plate 51, and the primary coil member 12 and the secondary coil member 83 can be moved along the axial direction of the shaft-shaped body 101 relative to the shaft-shaped body 101by the moving device 50.

In the secondary coil member 83, a length L₂ thereof along the relative movement direction is longer than the coil length L₁ of the primary coil member 12. Further, a coil end 83e of the secondary coil member 83 on the cooling unit 16 side protrudes toward the cooling unit 16 side than the coil end 12d of the primary coil member 12 on the cooling unit 16 side. Further, the coil end 83d of the secondary coil member 83 on a side opposite to the cooling unit 16 protrudes to a side opposite to the cooling unit 16 than the coil end 12c of the primary coil member 12 on the side opposite to the cooling unit 16. Accordingly, the primary coil member 12 is shielded by the secondary coil member 83.

In the above-described induction hardening apparatus 71, as illustrated in FIG. 5B, even when the scale S is widely scattered in the diagonally upward direction together with the cooling liquid L, the scale S collides with the secondary coil member 83 and does not collide with the primary coil member 12. Therefore, the adhesion of the scale S to the primary coil member 12 can be reliably prevented.

As described above, according to the induction hardening apparatus 71 of another example illustrated in FIG. 4, since the coil end 83d of the secondary coil member 83 on the side opposite to the cooling portion 16 protrudes toward the side opposite to the cooling portion 16 than the coil end 12c of the primary coil member 12 on the side opposite to the cooling portion 16, the coil end 12c of the primary coil member 12 on the side opposite to the cooling portion 16 will be shielded by the secondary coil member 83, even if a solid matter such as a scale is widely scattered, the scattered scale collides with the secondary coil member 12 before adhering to the primary coil member 83, so that adhering of the scale to the primary coil member 12 can be prevented.

FIG. 1 illustrates an example in which a rack and a pinion gear are used as the moving device 50. However, this is an example, and the moving device 50 of the present invention is not limited to this as long as the moving device 50 can move the heating portion 11, 81 and the cooling portion 16. In addition, FIG. 1 illustrates an example in which the heating portion 11 and the cooling portion 16 are moved with respect to the shaft-shaped body 101 which is fixed. However, the present invention is not limited to this form, and the shaft-shaped body 101 may be moved while the heating portion 11, 81 and the cooling portion 16 are fixed. Furthermore, FIG. 1 illustrates an example in which the axial direction of the shaft-shaped body 101 is in the up-down direction. However, the present invention is not limited to this, and the axial direction of the shaft-shaped body 101 may be in a horizontal direction, or the axial direction of the shaft-shaped body 101 may be inclined with respect to the up-down direction.

In addition, in the embodiments described above, the shaft-shaped body in which the large-diameter portion is provided in a part of the shaft main body is described as an example. However, the present invention can also be preferably applied to a shape such as a ball screw that does not have a large-diameter portion, which may cause a problem that a cooling liquid is scattered in the same manner as the shaft-shaped body according to the embodiments described above.

### [Brief Description of the Reference Symbols]

- 1, 71:: Induction hardening apparatus
- 11, 81:: Heating portion
- 12:: Primary coil member
- 12a:: Wound wire
- 12c:: Coil end on side opposite to cooling portion
- 12d:: Coil end on cooling portion side
- 13, 83:: Secondary coil member
- 13b:: Slit
- 13c:: Insulator
- 13d, 83d:: Coil end on side opposite to cooling portion
- 13e, 83e:: Coil end on cooling portion side
- 16:: Cooling portion
- 18:: Spray nozzle
- 50:: Moving device (Means for moving)
- 101:: Shaft-shaped body
- 102:: Shaft main body
- 103:: Large-diameter portion
- 104:: Level difference portion
- L:: Cooling liquid
- L₁:: Coil length of primary coil member
- L₂:: Length of secondary coil member

## Claims

1. An induction hardening apparatus for performing induction hardening on a shaft-shaped body, the apparatus comprising:
a heating portion which has a primary coil member comprising a wound wire through which a high frequency current flows and a secondary coil member disposed inside the wound wire of the primary coil member and having a hollow cylindrical shape into which the shaft-shaped body can be inserted, and is relatively movable along an axial direction of the shaft-shaped body; and
a cooling portion which has a spray nozzle through which a cooling liquid can be sprayed onto a surface of the shaft-shaped body, is disposed behind the heating portion in a relative movement direction, and is relatively movable along the axial direction of the shaft-shaped body together with the heating portion,
wherein a coil end of the secondary coil member on a cooling portion side protrudes toward the cooling portion side than a coil end of the primary coil member on the cooling portion side.

2. The induction hardening apparatus according to claim 1,
wherein a length of the secondary coil member along a relatively movement direction thereof is longer than a coil length of the primary coil member.

3. The induction hardening apparatus according to claim 1 or 2,
wherein a coil end of the secondary coil member on a side opposite to the cooling portion protrudes toward a side opposite to the cooling portion than a coil end of the primary coil member on a side opposite to the cooling portion.

4. The induction hardening apparatus according to any one of claims 1 to 3,
wherein the induction hardening apparatus comprises a means for moving which relatively moves the heating portion along the axial direction of the shaft-shaped member in a state that relative positions of the primary coil member and the secondary coil member are fixed.

5. The induction hardening apparatus according to any one of claims 1 to 4,
wherein a slit is provided on the secondary coil member along the relatively movement direction thereof and an insulator is provided inside the slit.
